# EUROPÄISCHE PATENTSCHRIFT

(11) **EP 1 317 681 B1**
(45) Veröffentlichungstag und Bekanntmachung des Hinweises auf die Patenterteilung: **08.12.2004**
(21) Anmeldenummer: 01976028.9
(22) Anmeldetag: 12.09.2001
(51) Int. Cl.: G02B 6/12

(54) **OPTISCHER CHIP UND VERFAHREN ZUR HERSTELLUNG EINES STRUKTURVERSTÄRKTEN OPTISCHEN CHIPS**
OPTICAL CHIP AND METHOD FOR PRODUCING AN OPTICAL CHIP HAVING A REINFORCED STRUCTURE
PUCE OPTIQUE ET PROCEDE DE PRODUCTION D'UNE PUCE OPTIQUE A STRUCTURE RENFORCEE

(30) Priorität: 14.09.2000 DE 10045566
(43) Veröffentlichungstag der Anmeldung: 11.06.2003
(73) Patentinhaber: Corning Incorporated, Corning, New York 14831 (US)
(72) Erfinder: RIEF, Angela, 80799 München (DE); SCHWEIKER, Wolfgang, 83629 Weyarn (DE); ZIMMER, Frank, 86937 Scheuring (DE); DEUTSCH, Bernhard, 83624 Otterfing (DE)
(74) Vertreter: Kühn, Armin
(86) Internationale Anmeldenummer: PCT/DE2001/003500
(87) Internationale Veröffentlichungsnummer: WO 2002/023238

(56) Entgegenhaltungen:
- EP-A- 0 484 011
- EP-A- 0 678 764
- WO-A-00/22465
- US-A- 5 327 517
- KATO ET AL: "Packaging of large-scale planar lightwave circuits" , ELECTRONIC COMPONENTS AND TECHNOLOGY CONFERENCE, 1997. PROCEEDINGS., 47TH SAN JOSE, CA, USA 18-21 MAY 1997, NEW YORK, NY, USA,IEEE, US, PAGE(S) 37-45 XP010234016 ISBN: 0-7803-3857-X das ganze Dokument

## Beschreibung

Die Erfindung betrifft ein Lichtwellenleiter-Bauelement in Form eines optischen Chips, an den Lichtwellenleiter (LWL), wie beispielsweise einzelne Fasern oder Faserarrays, und/oder andere Lichtwellenleiter-Bauelemente, wie Photodetektoren oder Photodetektorarrays, anschließbar sind. Die Erfindung betrifft ferner ein Verfahren zur Herstellung eines solchen optischen Chips.

Um eine optische Kopplung zwischen planaren LWL-Bauelementen, d.h. optischen Chips, und daran anzuschließenden Bauteilen realisieren zu können, müssen die optischen Chips strukturell verstärkt werden, damit sie den mit dem Anschluß von Lichtwellenleitern und sonstigen LWL-Bauteilen verbundenen mechanischen Belastungen standhalten. Hierzu werden die Chips gewöhnlich verdickt ausgebildet, indem die gesamte Unterseite des jeweiligen Chips mit einer zusätzlichen Glasplatte versehen wird, die nach Zwischenbringen von Klebematerial auf den Chip gepreßt wird. Die Glasplatte steift den Chip strukturell ausreichend aus, so dass dieser den zu erwartenden mechanischen Belastungen standhält.

Das einfache Anpressen der Glasscheibe an den.Chip hat jedoch den Nachteil, dass der Chip, welcher aufgrund seines gewöhnlichen Herstellungsprozesses eine leicht gebogene Form hat, eine Auf- bzw. Rückbiegung erfährt. Letztere führt zu Verspannungen im Chip und damit zu Beeinflussungen der im Chip untergebrachten Lichtwellenleiter aus Glas, da in den Lichtwellenleitern aufgrund der Verspannungen zusätzliche Brechungen hervorgerufen werden. Ferner ist insbesondere bei optischen Chips mit thermooptischen Strukturen, die beispielsweise zum Abschwächen oder zum Schalten erforderlich sind, die ganzflächig auf die Unterseite aufgebrachte Glasplatte dahingehend von Nachteil, dass hierdurch die.durch das Silizium- oder Glassubstrat des Chips hindurch in rückwärtige Richtung erforderliche gute Wärmeleitung verschlechtert wird.

Aus der US-A-5 327 517 ist ein Lichtwellenleiter-Schaltkreismodul bekannt, mit einem Lichtwellenleiterchip, der einen Eingangs-Wellenleiterabschnitt, einen Ausgangswellenleiterabschnitt und dazwischen einen Wellenleiter-Schaltkreis hat, und mit einem Halter zum Halten des Chips, wobei der Wellenleiterschaltkreis nicht in Kontakt mit dem Halter ist.

Aus der EP 0 678 764 Al ist ein Verfahren zum Herstellen einer integralen optischen Vorrichtung bekannt, wobei auf einem Substrat eine optische Wellenleiterstruktur ausgebildet wird, über der Wellenleiterstruktur eine verstärkungsschicht ausgbildet wird und jener Bereich des Substrats entfernt wird, der unter der Wellenleiterstruktur liegt.

Durch die Erfindung wird ein optischer Chip mit thermooptischer Struktur geschaffen, der eine ausreichend strukturelle Festigkeit hat und bei dem durch festigkeitssteigernde Komponenten hervorgerufene Beeinträchtigungen seiner optischen, insbesondere thermooptischen Eigenschaften vermindert sind. Durch die Erfindung wird ferner ein Verfahren zur Herstellung des optischen Chips geschaffen, mit welchem der optische Chip mit verbesserten optischen Eigenschaften und dennoch ausreichender struktureller Festigkeit herstellbar ist.

Dies wird erfindungsgemäß durch einen optischen Chip mit den Merkmalen im Anspruch 1 bzw. durch Verfahren mit den Merkmalen gemäß den Ansprüchen 11 und 12 erreicht. Bevorzugte Weiterbildungen des optischen Chips sind in den Ansprüchen 2 bis 10 beschrieben.

Unter dem Begriff "zusammenhängender" Versteifungsstruktur ist hierbei zu verstehen, dass die Versteifungsstruktur nicht aus separaten Einzelelementen bestehend vorgesehen ist, sondern dass sie sich durchgehend, das heißt ununterbrochen auf dem Substrat erstreckt.

Dadurch dass die thermooptischen Strukturen von der Versteifungsstruktur ausgespart sind, wird unterhalb dieser Strukturen eine rückwärtige Wärmeableitung, d.h. eine Wärmeableitung nach unten, nicht behindert. Damit kann sich zwischen Ober- und Unterseite des Chips ein ausreichend großer Temperaturgradient einstellen, der für eine gute Funktion der thermooptischen Strukturen wesentlich ist: Somit wird insgesamt eine Verbesserung der thermooptischen Eigenschaften des Chips erzielt. Die Versteifungsstruktur, obwohl schicht- d.h. flächenförmig vorgesehen, hat die Funktion einer Versteifungsrippenanordnung, mit welcher eine ausreichende strukturelle Festigkeit des Substrats erzielt wird. An jenen Abschnitten des Substrats, die von der Versteifungsstruktur ausgespart sind, sind die Verspannungen im Substrat reduziert, da die Versteifungsstruktur in diesen Abschnitten das Substrat nicht unmittelbar zur Anpassung an seine eigene Form zwingen kann. Hierdurch wird eine Verbesserung der optischen Eigenschaften des Chips erzielt. Optische Ankopplungen von chipexternen LWL-Leitungen und Bauteilen können an den durch die Versteifungsstruktur verstärkten Bereichen des Chips angeordnet werden.

Nach der Ausführungsform gemäß Anspruch 4 wird eine Beeinflussung der optischen Eigenschaften des Chips durch die Versteifungsstruktur nahezu ausgeschlossen, denn das Substrat wird nicht zwangsweise an die Form der Versteifungsstruktur angepaßt, wodurch andernfalls, wie oben erläutert, Verspannungen im Substrat und den darauf angeordneten Lichtwellenleitern entstehen würden. Die erläuterte spannungsfreie Verbindung zwischen Substrat und Versteifungsstruktur ist sowohl bei als thermooptischen Strukturen vorgesehenen optischen Strukturen als auch beim Einsatz von anderen optischen Strukturen, wie AWG (arrayed waveguide grating) oder Splitter-Strukturen vorteilhaft. Bei der Verwendung von nicht-thermooptischen Strukturen auf dem optischen Chip ist dieser ebenfalls bevorzugt nicht ganzflächig, sondern insbesondere unter Aussparung der optischen Strukturen mit der Versteifungsstruktur versehen.

Die Erzeugung einer spannungsfreien Verbindung zwischen Substrat und Versteifungsstruktur erfolgt vorteilhafterweise wie im Anspruch 11 beschrieben.

Hierbei ist zu bemerken, daß das Haftmittel auch dadurch schichtförmig auf die Unterseite des Substrats aufbringbar ist, daß es auf die dieser Unterseite zugewandte Seite der Versteifungsstruktur schichtförmig aufgebracht wird, welche dann auf das Substrat aufgelegt wird.

Indem die Versteifungsstruktur lediglich auf das Substrat aufgelegt wird und man das zwischen das Substrat und die Versteifungsstruktur eingebrachte Haftmittel ohne weitere äußere mechanische Einwirkung auf das Substrat und die Versteifungsstruktur einfach aushärten lässt, wird eine spannungsfreie Verbindung zwischen Substrat und Versteifungsstruktur erzielt, welche die oben genannten Verbesserungen hinsichtlich der optischen Eigenschaften des Chips mitsichbringt.

Als Haftmittel kommen Klebemittel in Frage, insbesondere Klebemittel, mittels denen ohne allzu starke Zuführung von Wärme eine ausreichend gute Haftung der Versteifungsstruktur am Substrat erzielt wird.

Nach dem Aushärten des Haftmittels und dem eventuellen Aufbringen von zusätzlichen auf der Oberseite des Substrats aufzubringenden Schichten und/oder Bauteilen, kann der Chip umfangsseitig geschliffen und poliert werden.

Im Falle dass thermooptische Strukturen auf dem optischen Chip vorgesehen sind, werden diese erfindungsgemäß in der Chipebene gesehen weiträumig von der Versteifungsstruktur ausgespart. Bei anderen.optischen Strukturen, wie den oben genannten Splittern und AWG-Strukturen, kann zwar, weil die Ausbildung eines Temperaturgradients von oben nach unten nicht erforderlich ist, die Versteifungsstruktur auf die gesamte untere Seitenfläche des Substrats des optischen Chips aufgebracht werden; sie ist jedoch bevorzugt ebenfalls nur teilweise, insbesondere unter Aussparung der optischen Strukturen vorgesehen, weil hierdurch die optischen Eigenschaften des Chips verbessert sind.

Nach einer Ausführungsform der Erfindung ist die Versteifungsstruktur unter Ausbildung einer mittigen Aussparung in Form eines das Substrat randseitig teilweise umlaufenden Rahmens ausgebildet. Durch den hierdurch erzielten, umfangsseitig des Chips angeordneten Versteifungsrahmen wird eine starke Versteifungswirkung erzielt, die es erlaubt, die mittige Aussparung mit großen Abmessungen auszubilden, um dort eine Mehrzahl von unterschiedlichen thermooptischen Strukturen anzuordnen. Diese Versteifungsstruktur eignet sich insbesondere für rechteckförmige Chips, wobei die thermooptischen Strukturen bevorzugt entlang einer Längsseite des Chips angeordnet werden. Nach einer anderen Ausführungsform der Erfindung ist die Versteifungsstruktur in Form eines Kreuzes ausgebildet, das unter Bereitstellen von diametral einander gegenüberliegenden Aussparungen, zentral auf dem Substrat angeordnet ist. Diese Versteifungsstruktur eignet sich insbesondere für kreisförmige Chips. Die Balken des Kreuzes der Versteifungsstruktur erstrecken sich bevorzugt zumindest bis an den Seitenrand des Substrats, so dass optische Leitungen, wie z.B. Glasfasern, seitlich des Chips an denselben herangeführt und dort angebracht werden können. Die entstehenden vier Aussparungen sind hierbei, jeweils an zwei Seiten von der Versteifungsstruktur derart umgriffen, dass die den Aussparungen zugeordneten kreisbogenförmigen Randseiten des Substrats frei bleiben.

Um während des Betriebs durch Temperaturschwankungen auftretende Verspannungen des Substrats zu verhindern, ist die Versteifungsstruktur vorteilhafterweise aus einem Material, das im wesentlichen den gleichen wärmeausdehnungskoeffizient wie das Substratmaterial hat. Unter im wesentlichen sind hierbei Differenzen der Größenordnung 10⁻⁶ zu verstehen.

Ein geeignetes Substratmaterial ist Glas. Glasmaterial hat eine ausreichende versteifungsfunktion und kann einfach mit dem Substrat, welches seinerseits entweder aus Silizium oder ebenfalls aus Glas ist, verbunden, insbesondere geklebt werden. Jedoch kommen auch andere Materialien mit ausreichender Versteifungsfunktion und guter Handhabbarkeit in Frage.

Mit der Ausführungsform gemäß Anspruch 7 wird der Vorteil erzielt, dass sich im Bereich der thermooptischen Struktur ein starker Temperaturgradient mit von oben nach unten durch das Chipsubstrat hindurch abfallender Temperatur ausbilden kann, wodurch die Funktion der thermooptischen Struktur wesentlich verbessert wird. Hierbei würde eine direkt oberhalb der thermooptischen Strukur, die ebenfalls bevorzugt in der Trägerschicht vorgesehen ist, ausgebildete Schutzstruktur zu einer Wärmeleitung via direktem Kontakt mit der Trägerschicht führen, so dass Wärme unmittelbar von der thermooptischen Struktur nach oben weggeleitet würde, was zu einer Verminderung der Temperatur unmittelbar an der thermooptischen Struktur und damit zu einer Verminderung des Temperaturgradients nach unten führen würde. Indem nach der Erfindung die thermooptische Struktur von der Schutzstruktur auf der Oberseite der Trägerschicht ausgespart ist, findet eine solche direkte schnelle Wärmeableitung nicht statt, wobei der Wärmeübergang zwischen der Trägerschicht und der diese umgebende Luft geringer ist.

Mit der gemäß Anspruch 12 erstellten, spannungsfreien Verbindung zwischen Schutzstruktur und Trägerschicht werden die gleichen vorteilhaften Effekte erzielt, wie bei der spannungsfreien Verbindung zwischen dem Substrat und der auf seiner Unterseite vorgesehen Versteifungsstruktur.

Bevorzugt sind sowohl Schutzstruktur als auch Versteifungsstrukutr in Kombination vorgesehen.

Bevorzugt sind die Schutzstruktur und die Trägerschicht aus einem Material, das im wesentlichen den gleichen Ausdehnungskoeffizient wie das Substratmaterial hat.

Ein bevorzugtes Material für die Schutzstruktur ist entsprechend dem bevorzugten Versteifungsstrukturmaterial Glas. Die Schutzstruktur muß nicht zusammenhängend vorgesehen sein, sondern kann aufgeteilt in voneinander separate Teile nur in jenen Bereichen angeordnet sein, wo ein Schleifen und Polieren der Lichtwellenleiterstukturen, d.h. der Lichtwellenleiter, erforderlich ist, um deren Beschädigung, z.B. in Form von Glasausbrüchen, zu verhindern. Daher ist die Schutzstruktur insbesondere wenigstens an den Randabschnitten des Chips unmittelbar überhalb der Lichtwellenleiterstrukturen vorgesehen, da externe Lichtwellenleiterfasern randseitig des Chips an dessen Lichtwellenleiterstrukturen angeschlossen werden, wobei letztere durch stirnseitiges Schleifen und Polieren des Chips zur Ausbildung von randseitigen, optischen Anschlußstellen bearbeitet werden.

Im Folgenden werden bevorzugte Ausführungsformen der Erfindung mit Bezugnahme auf die Zeichnung erläutert. In der Zeichnung zeigen :
Figur 1 eine schematische Darstellung eines optischen Chips nach einer Ausführungsform der Erfindung in einer Ansieht von unten,
Figur 2 eine schematische Darstellung eines optischen Chips nach einer anderen Ausführungsform der Erfindung in einer Ansicht von unten, und
Figur 3 einen Querschnitt durch einen optischen Chip nach einer Ausführungsform der Erfindung.

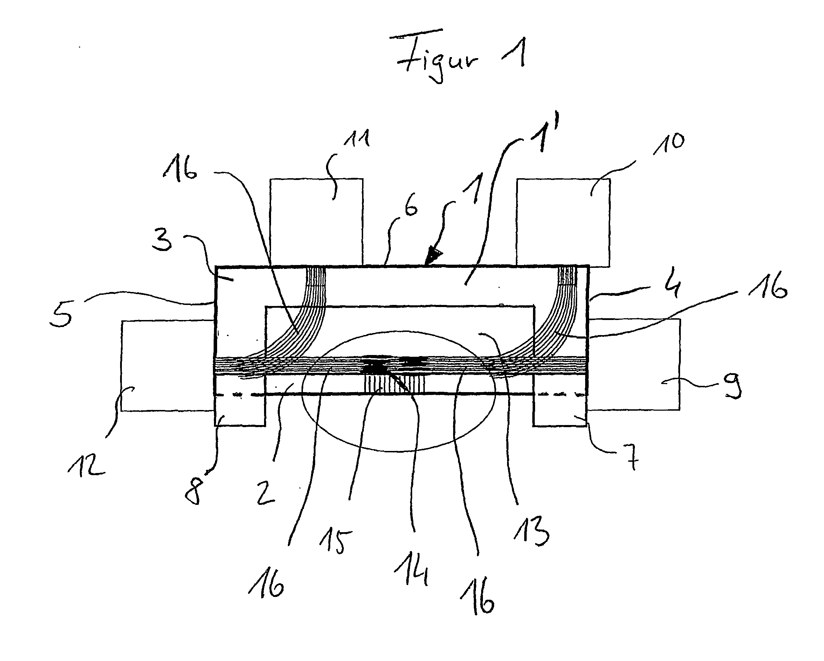

Der aus Figur 1 ersichtliche optische Chip 1 hat ein Substrat 1' (dargestellt durch die dicke, rechteckförmige Linie) in Form eines Rechtecks mit unterschiedlichen Seitenlängen. Das Substrat 1' ist an seiner Unterseite 2 mit einer Versteifungsstruktur 3 versehen, die sich entlang der beiden kurzen Randseiten 4, 5 und entlang einer 6 der beiden langen Randseiten erstreckt (in Figur 1 die obere Randseite). Die Versteifungsstruktur 3 bildet somit einen den Chip 1 entlang dreier Randseiten 4, 5 und 6 umlaufenden und damit teilweise umgreifenden, U-förmigen Versteifungsrahmen. Die beiden Schenkel 7, 8 der rahmenförmigen Versteifungsstruktur 3 stehen hierbei an den beiden Längsenden des Chips 1 in Breitenrichtung desselben etwas über dessen rechteckförmiges Substrat 1' (dargestellt durch die dicke Linie) hinaus. Die Breite der rahmenförmigen Versteifungsstruktur 3 ist nach dieser Ausführungsform knapp halb so groß wie die Breite des Substrats 1' des Chips 1. Im Falle dass der Chip 1 hinsichtlich seiner Länge und Breite größere Abmessungen oder kleinere Abmessungen hat, kann die Breite der rahmenförmigen Versteifungsstruktur dementsprechend größer bzw. kleiner als die Breite des Substrats gewählt sein. An dem Chip 1 sind umfangsseitig vier optische Verbindungsstellen 9, 10, 11, 12 vorgesehen, welche jeweils an solchen Stellen des Chips 1 angeordnet sind, an denen die Versteifungsstruktur 3 verläuft. Über diese optischen Verbindungsstellen 9, 10, 11, 12 sind externe Lichtwellenleiter-Leitungen und/oder sonstige LWL-Bauteile an den Chip 1 anschließbar. Durch die Versteifungsstruktur 3 werden hierbei ausreichend große und stabile Anschlußstellen ausgebildet, wodurch es zum Beispiel möglich ist, die externen Komponenten, wie Leitungen, an dem Chip 1 anzukleben.

Aufgrund der randseitig teilweise umlaufenden Versteifungsstruktur 3 ist der mittlere Bereich 13 des Chips 1 von der Versteifungsstruktur 3 weiträumig ausgespart. In diesem mittleren Bereich 13 ist der Chip 1 mit einer thermooptischen Struktur 14 versehen (schematisch durch eine Ellipse angedeutet), deren Anschlüsse 15 randseitig an der freien Längsseite des Chips 1 vorgesehen sind. An diese Anschlüsse 15 werden sehr feine Leitungsdrähte angeschlossen, z.B. Golddrähte, so dass in diesem Bereich eine strukturelle Verstärkung durch die Versteifungsstruktur 3 nicht erforderlich ist.

Ansonsten sind auf dem Chip 1 ferner chip-interne Lichtwellenleiter in Form von LWL-Strukturen 16 angeordnet, über welche die optischen Verbindungen 9, 10, 11, 12 untereinander und mit der thermooptischen Struktur 14 verbunden sind.

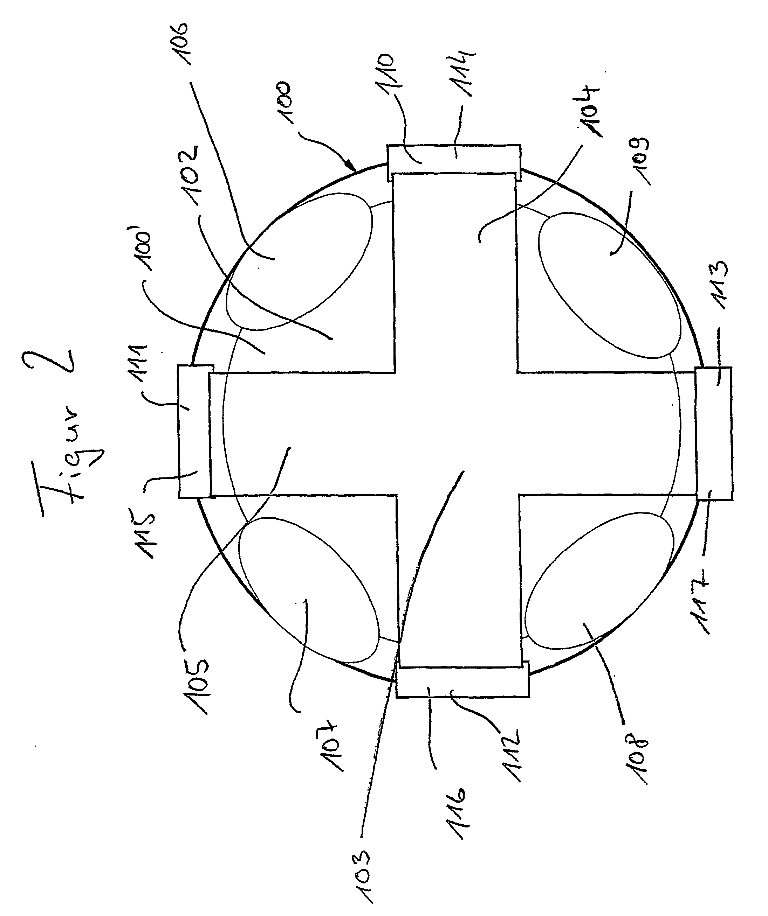

In Figur 2 ist ein optischer Chip 100 nach einer anderen Ausführungsform der Erfindung dargestellt. Dieser optische Chip 100 hat ein kreisförmiges Substrat 100' (durch dicke Linie dargestellt). An seiner Unterseite 102 ist der optische Chip 100 mit einer Versteifungsstruktur 103 versehen, die in Form eines zentral auf der Unterseite 102 des Substrats 100' angeordneten Kreuzes ausgebildet ist. Die Balken 104, 105 der kreuzförmigen Versteifungsstruktur 103 kreuzen sich in einem Winkel von 90° und erstrecken sich quer über den Chip 1 hinweg bis zu dessen Umfangsrand hin. Die Breite der Balken 104, 105 der kreuzförmigen Versteifungsstruktur 103 beträgt ca. 1/4 des Durchmessers des Chips 100.

Aufgrund der Kreuzform der Versteifungsstruktur 103 sind in der Draufsicht des Chips 100 gesehen auf demselben vier Bereiche von der Versteifungsstruktur 103 ausgespart. In jedem dieser vier Bereiche ist eine thermooptische Struktur 106, 107, 108, 109 auf dem Chip 1 vorgesehen, mittels welcher die optischen Eigenschaften der auf dem Chip 1 vorgesehenen Lichtwellenleiter und damit die optischen Eigenschaften des Chips 1 einstellbar sind.

An den vier stirnseitigen Endabschnitten 110, 111, 112, 113 der Versteifungsstruktur 103 sind jeweils Kupplungseinrichtungen 114, 115, 116, 117 zum Anschluß von externen Lichtwellenleiter-Leitungen und sonstigen LWL-Bauelementen vorgesehen.

Die breitflächige Versteifungsstruktur 103 bietet hierbei genug Fläche, um die externen Bauteile problemlos, z.B. mittels Klebens, an dem Chip 1 zu befestigen. Die Versteifungsstruktur 103 erstreckt sich mit einem derart weiten Abstand um die thermooptischen Strukturen 106, 107, 108, 109, dass eine Wärmeableitung ausgehend von der jeweiligen thermooptischen Struktur 106, 107, 108, 109 nach unten nicht durch eine Isolationswirkung der Versteifungsstruktur 103 behindert wird.

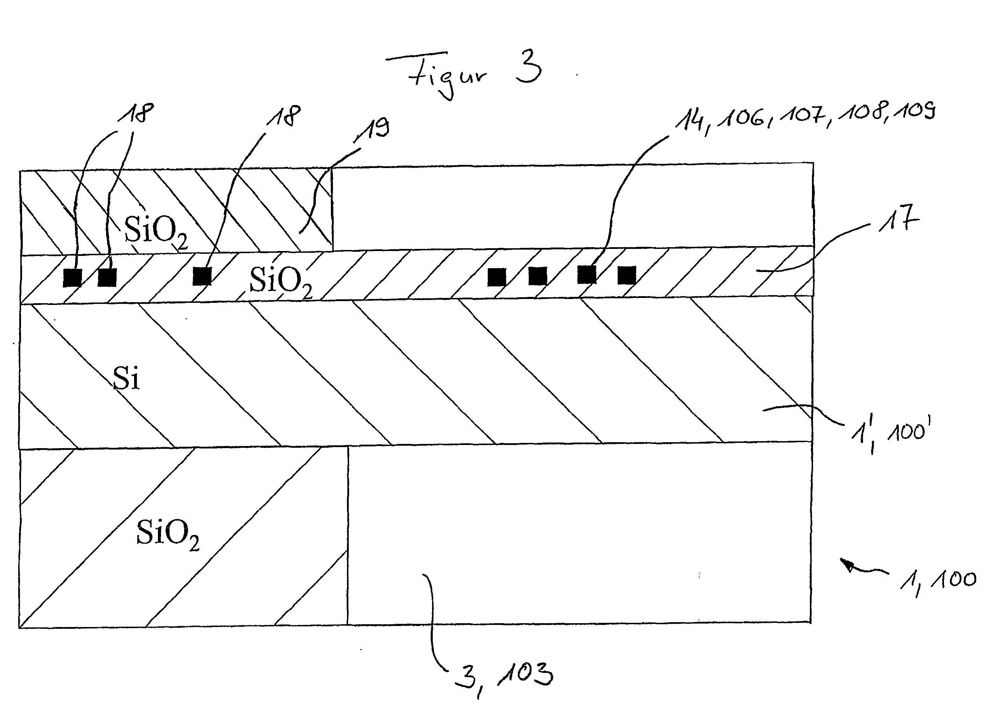

In Figur 3 ist eine schematische Schnittansicht eines *erfindungsgemäßen optischen* Chips 1, 100 *dargestellt*. *Diese* Schnittansicht bezieht sich sowohl auf den optischen Chip 1 nach Figur 1 als auch auf jenen nach Figur 2, so dass entsprechende Bezugszeichen für die jeweils gleichen Bauteile verwendet werden.

Wie aus Figur 3 ersichtlich ist, ist ein Substrat 1', 100' des Chips 1, 100 in Form einer Siliziumschicht ausgebildet. Auf der Oberseite des Substrats 1', 100' ist eine Trägerschicht in Form einer Glasschicht 17 (Siliziumdioxid) angeordnet, welche sich über das gesamte Substrat 1', 100' hinweg erstreckt und dünner als das Substrat 1', 100' ausgebildet ist (ca. 1/10 der Substratdicke). In der von der Glasschicht gebildeten Trägerschicht 17 sind Lichtwellenleiterstrukturen 18, d.h.

Lichtwellenleiter, eingebettet, die ebenfalls aus Glasmaterial bestehen. Auf der rechten Seite in Figur 3 ist in der Trägerschicht 17 des Chips 1, 100 eine thermooptische Wellenleiterstruktur 14, 106, 107, 108, 109 eingebettet.

An der Unterseite des Substrats 1', 100' des Chips 1, 100 ist eine Versteifungs- oder Stützstruktur 3, 103 angeordnet, welche in Form einer Schicht aus Siliziumdioxid ausgebildet ist, die eine größere Dicke als das Substrat 1', 100' hat. Wie oben erläutert, erstreckt sich die Stützstruktur 3, 103 nicht über das gesamte Substrat 1', 100' hinweg. Stattdessen ist, die Chipebene betrachtend, der Ort der thermooptischen Wellenleiterstruktur 14, 106, 107, 108, 109 von der auf der Unterseite des Substrats 1', 100' angeordneten Versteifungsstruktur 3, 103 ausgespart, d.h. unterhalb der thermooptischen Struktur 14, 106, 107, 108, 109 verläuft kein Abschnitt der Versteifungsstruktur 3, 103. Daher kann eine Wärmeabfuhr ausgehend von der thermooptischen Struktur 14, 106, 107, 108, 109 in Richtung nach unten (rückwärtige Richtung) durch das Substrat 1', 100' hindurch ungehindernd erfolgen.

Auf der Oberseite der Glasschicht 17 ist ferner eine schichtförmige Schutzstruktur 19 in Form von mehreren, voneinander separaten, als Deckplatten oder Deckplättchen vorgesehenen Glasschichten angeordnet (nur eine ist im Schnitt dargestellt), welche eine größere Dicke als die, bevorzugt die 10-fache Dicke der, darunterliegenden Trägerschicht 17 haben. In der Draufsicht des Chips 1, 100 gesehen erstreckt sich die Schutzstruktur 19 in einem wesentlichen Abstand von den thermooptischen Strukturen 14, 106, 107, 108, 109. Die Schutzstruktur 19 kann auch zusammenhängend vorgesehen sein. Sie ist zum Schutz der empfindlichen Lichtwellenleiterstrukturen 18 genau über denselben verlaufend angeordnet. Hiebei erstreckt sie sich insbesondere an jenen Stellen vorgesehen, an denen optische Leitungen, wie externe Glasfasern an den Chip 1, 100 herangeführt und angeschlossen werden, um dort die auf dem Chip 1, 100 ausgebildeten, sehr empfindlichen Anschlußstrukturen aus Glas auch von der Oberseite des Chips 1, 100 her zu schützen. Das heißt, die Anschlußstrukturen sind sandwichartig zwischen der Verteifungsstruktur 3, 103 und der Schutzstruktur 19 eingepackt. Die auf der Trägerschicht 17 angeordnete, schichtförmige Schutzstruktur 19 bildet insbesondere an der Stirnseite des Chips 1, 100 einen Schutz für die unter ihr angeordneten Lichtwellenleiter 18, da von ihr bei notwendigen stirnseitigen Schleif- und Polierprozessen Glasausbrüche an den empfindlichen Wellenleiterstrukturen verhindert werden. Sie wird nach dem erfindungsgemäßen Herstellungsverfahren, wie auch die Versteifungsstruktur 3, 103, auf ihrer dem Substrat 1', 100' zugewandten Seite mit einem Klebematerial versehen und auf die Glasschicht 17 aufgelegt. Anschließend läßt man das Klebematerial aushärten, ohne dass man auf die Glasschicht 19 oder ein sonstiges Teil des Chip 1, 100 eine neben der Gewichtskraft zusätzliche äußere mechanische Belastung ausübt. Dadurch dass sich die Glasschicht um die ggf. auf dem Chip 1, 100 vorgesehenen thermoptischen Strukturen herumerstreckt, wird verhindert, dass die nach oben unerwünschte Wärmeableitung (wegen des Aufbaus eines möglichst großen Temperaturgradients mit in Richtung von oben nach unten abfallender Temperatur) ausgehend von den thermooptischen Strukturen 14, 106, 107, 108, 109 durch eine unmittelbar über diesen auf der Trägerschicht 17 angeordnete weitere Schicht durch direkte Wärmeleitung verstärkt würde. Im Falle der Verwendung von nicht thermooptischen Strukturen, kann sich die Schutzstruktur 19 jedoch auch über diese hinwegerstrecken.

## Patentansprüche

1. Optischer Chip (1, 100) mit einem Substrat (1', 100'), auf der Oberseite des Substrats (1', 100') angeordneten Lichtwellenleitern (18), wenigstens einer auf der Oberseite des Substrats (1', 100') angeordneten thermooptischen Struktur (14, 106, 107, 108, 109) zur Beeinflussung der optischen Eigenschaften der Lichtwellenleiter (18), und einer auf der Unterseite des Substrats (1', 100') vorgesehenen, zusammenhängenden, schichtförmigen Versteifungsstruktur (3, 103), wobei die Versteifungsstruktur (3, 103) und die jeweilige thermooptische Struktur (14, 106, 107, 108, 109) derart vorgesehen sind, dass sich die Versteifungsstruktur (3, 103) in der Draufsicht des Chips (1, 100) gesehen in zwei zueinander senkrechten Richtungen in einem Abstand von der jeweiligen thermooptischen Struktur (14, 106, 107, 108, 109) quer über das Substrat (1', 100') und/oder entlang des freien Rands des Substrats (1', 100') wenigstens teilweise um die jeweilige thermooptische Struktur (14, 106, 107, 108, 109) herumerstreckt.

2. optischer Chip (1) nach Anspruch 1, wobei die Versteifungsstruktur (3) unter Ausbildung einer mittigen Aussparung in Form eines das Substrat (1') randseitig teilweise umlaufenden Rahmens ausgebildet ist.

3. Optischer Chip (100) nach Anspruch 1, wobei die Versteifungsstruktur (103) in Form eines Kreuzes ausgebildet ist, das unter Bereitstellen von diametral einander gegenüberliegenden Aussparungen zentral auf dem Substrat (100') angeordnet ist.

4. Optischer Chip (1, 100) nach einem der Ansprüche 1 bis 3, wobei die Versteifungsstruktur (3, 103) mit dem Substrat (1', 100') spannungsfrei verbunden ist.

5. Optischer Chip (1, 100) nach einem der Ansprüche 1 bis 4, wobei die Versteifungsstruktur (3, 103) aus einem Material ist, das im wesentlichen den gleichen Ausdehnungskoeffizient wie das Substratmaterial hat.

6. Optischer Chip (1, 100) nach einem der Ansprüche 1 bis 5, wobei die Versteifungsstruktur (83, 103) aus Glasmaterial ist.

7. Optischer Chip (1, 100) nach einem der Ansprüche 1 bis 6, wobei die Lichtwellenleiter (18) in einer auf der Oberseite des Subtrats (1', 100') angeordneten Trägerschicht (17) vorgesehen sind, und wobei auf der Oberseite der Trägerschicht (17) eine schichtförmige Schutzstruktur (19) ausgebildet ist, die über den Lichtwellenleitern (18) zumindest an den Randabschnitten des optischen Chips (1, 100) vorgesehen ist und die sich in der Draufsicht des Chips (1; 100) gesehen in einem Abstand von der jeweiligen thermooptischen Struktur (14, 106, 107, 108, 109) erstreckt.

8. Optischer Chip (1, 100) nach Anspruch 7, wobei die oberseitige Schutzstruktur (19) mit der Trägerschicht (17) spannungsfrei verbunden ist.

9. Optischer Chip (1, 100) nach Anspruch 7 oder 8, wobei die oberseitige Schutzstruktur (19) und die Trägerschicht (17) aus einem Material sind, das im wesentlichen den gleichen Ausdehnungskoeffizient wie das Substratmaterial hat.

10. Optischer Chip (1, 100) nach einem der Ansprüche 7 bis 9, wobei die oberseitige Schutzstruktur (19) eine Glasschicht ist.

11. Verfahren zum Herstellen eines optischen Chips (1, 100) nach einem der Ansprüche 1 bis 10, wobei ein aushärtbares Haftmittel schichtförmig auf die Unsterseite (2, 102) des Substrats (1', 100') aufgebracht wird, die schichtförmige Versteifungsstruktur (3, 103) auf das Haftmittel aufgelegt wird, und das Haftmittel unter Ausbilden einer spannungsfreien Verbindung zwischen der Versteifungsstruktur (3, 103) und dem Substrat (1', 100') ohne mechanische Einwirkungen auf den Chip (1, 10) ausgehärten wird.

12. Verfahren zum Herstellen eines strukturverstärkten optischen Chips (1, 100) nach einem der Ansprüche 7 bis 10, , wobei ein aushärtbares Haftmittel schichtförmig auf die Oberseite der Trägerschicht (17) aufgebracht wird, eine schichtförmige Schutzstruktur (19) auf das Haftmittel aufgelegt wird, und das Haftmittel unter Ausbilden einer spannungsfreien Verbindung zwischen der Schutzstruktur (19) und der Trägerschicht (17) ohne mechanische Einwirkungen auf den Chip (1, 100) ausgehärtet wird.

## Claims

1. Optical chip (1, 100) having a substrate (1', 100') in which optical conductors (18) arranged on the top side of the substrate (1', 100'), at least one thermooptical structure (14, 106, 107, 108, 109), arranged on the top side of the substrate (1', 100'), for the purpose of influencing the optical properties of the optical conductors (18), and a cohesive, layered stiffening structure (3, 103) provided on the underside of the substrate (1', 100'), the stiffening structure (3, 103) and the respective thermooptical structure (14, 106, 107, 108, 109) being provided in such a way that, seen in the top view of the chip (1, 100), the stiffening structure (3, 103) extends in two to each other perpendicular directions at a distance from the respective thermooptical structure (14, 106, 107, 108, 109) transversely over the substrate (1', 100') and/or along the free edge of the substrate (1', 100') at least partially around the respective thermooptical structure (14, 106, 107, 108, 109).

2. Optical chip (1) according to claim 1 in which the stiffening structure (3) is formed by forming a central cutout in the form of a frame running partially around the edge of the substrate (1').

3. Optical chip (100) according to claim 1 in which the stiffening structure (103) is formed in the form of a cross which is arranged centrally on the substrate (100') by providing diametrically each other opposite cutouts.

4. Optical chip (1, 100) according to one of the claims 1 to 3 in which the stiffening structure (3, 103) being connected to the substrate (1', 100') in a fashion free of stress.

5. Optical chip (1, 100) according to one of the claims 1 to 4 in which the stiffening structure (3, 103) is made from a material which has substantially the same coefficient of expansion as the substrate material.

6. Optical chip (1, 100) according to one of the claims 1 to 5 in which the stiffening structure (83, 103) is made from a glass material.

7. Optical chip (1, 100) according to one of the claims 1 to 6 in which said optical conductors (18) are provided in a carrier layer (17) arranged on the top side of the substrate (1', 100'), and in which a layered protective structure (19) is formed on the top side of the carrier layer (17) and is provided over the optical conductors (18) at least at the edge sections of the optical chip (1, 100), and, seen in the top view of the chip (1, 100), extends at a distance from the respective thermooptical structure (14, 106, 107, 108, 109).

8. Optical chip (1, 100) according to claim 7 in which said protective structure (19) on the top side is connected to the carrier layer (17) in a fashion free of stress.

9. Optical chip (1, 100) according to claim 7 or 8 in which said protective structure (19) on the top side and the carrier layer (17) are made from a material which has substantially the same coefficient of expansion as the substrate material.

10. Optical chip (1, 100) according to one of the claims 7 to 9 in which the protective structure (19) on the top side is a glass layer.

11. Method for producing an optical chip (1, 100) according to one of the claims 1 to 10 in which a curable primer being applied in a layered fashion to the underside (2, 102) of the substrate (1', 100'), the layered stiffening structure (3, 103) being laid onto the primer, and the primer being cured by forming a stress-free connection between the stiffening structure (3, 103) and the substrate (1', 100') without applying mechanical effects on the chip (1, 100).

12. Method for producing a structurally strengthened optical chip (1, 100) according to one of the claims 7 to 10 in which a curable primer being applied in a layered fashion to the top side of the carrier layer (17), a layered protective structure (19) being laid onto the primer, and the primer being cured by forming a stress-free connection between the protective structure (19) and the carrier layer (17) without applying mechanical effects on the chip (1, 100).

## Revendications

1. Puce optique (1, 100) avec un substrat (1', 100'), des guides d'ondes optiques (18) disposés sur la face supérieure du substrat (1', 100'), au moins une structure thermo-optique (14, 106, 107, 108, 109) disposée sur la face supérieure du substrat (1', 100') pour agir sur les propriétés optiques des guides d'ondes optiques (18), et une structure de rigidification (3, 103) en forme de couche, d'un seul tenant, prévue sur la face inférieure du substrat (1', 100'), la structure de rigidification (3, 103) et la structure thermo-optique (14, 106, 107, 108, 109) respective étant prévues de manière que la structure de rigidification (3, 103), dans une vue de dessus de la puce (1, 100), s'étende dans deux directions perpendiculaires l'une à l'autre, à une distance de la structure thermo-optique (14, 106, 107, 108, 109) respective, transversalement sur le substrat (1', 100') et/ou le long du bord libre du substrat (1', 100'), au moins en partie autour de la structure thermo-optique (14, 106, 107, 108, 109) respective.

2. Puce optique (1) selon la revendication 1 dans laquelle la structure de rigidification (3) est réalisée de manière à former une découpe centrale sous la forme d'un cadre entourant en partie les bords du substrat (1').

3. Puce optique (100) selon la revendication 1, dans laquelle la structure de rigidification (103) est réalisée sous la forme d'une croix qui est disposée au centre sur le substrat (100'), en réalisant des découpes diamétralement opposées l'une à l'autre.

4. Puce optique (1, 100) selon l'une des revendications 1 à 3, dans laquelle la structure de rigidification (3, 103) est reliée sans tension au substrat (1', 100').

5. Puce optique (1, 100) selon l'une des revendications 1 à 4, dans laquelle la structure de rigidification (3, 103) est constituée d'une matière qui présente sensiblement le même coefficient de dilatation que la matière du substrat.

6. Puce optique (1, 100) selon l'une des revendications 1 à 5, dans laquelle la structure de rigidification (83, 103) est en matériau de verre.

7. Puce optique (1, 100) selon l'une des revendications 1 à 6, dans laquelle les guides d'ondes optiques (18) sont prévus dans une couche de support (17) disposée sur la face supérieure du substrat (1', 100'), et dans laquelle sur la face supérieure de la couche de support (17) est réalisée une structure de protection (19) en forme de couche qui est prévue sur les guides d'ondes optiques (18) au moins dans les parties de bordure de la puce optique (1, 100), et qui, dans une vue de dessus de la puce (1, 100), s'étend à une distance de la structure thermo-optique (14,106, 107,108, 109) respective.

8. Puce optique (1, 100) selon la revendication 7, dans laquelle la structure de protection (19) de la face supérieure est reliée sans tension à la couche de support (17).

9. Puce optique (1, 100) selon la revendication 7 ou 8, dans laquelle la structure de protection (19) de la face supérieure et la couche de support (17) sont constituées d'une matière qui présente sensiblement le même coefficient de dilatation que la matière du substrat.

10. Puce optique (1, 100) selon l'une des revendications 7 à 9, dans laquelle la structure de protection (19) de la face supérieure est une couche de verre.

11. Procédé de fabrication d'une puce optique (1, 100) selon l'une des revendications 1 à 10, dans lequel un agent adhésif durcissable est appliqué en forme de couche sur la face inférieure (202) du substrat (1', 100'), la structure de rigidification (303) en forme de couche étant placée sur l'agent adhésif, et l'agent adhésif est durci en formant une liaison sans tension entre la structure de rigidification (3, 103) et le substrat (1', 100'), sans actions mécaniques sur la puce (1, 100).

12. Procédé de fabrication d'une puce optique (1, 100) à structure renforcée selon l'une des revendications 7 à 10, dans lequel un agent adhésif durcissable est appliqué en forme de couche sur la face supérieure de la couche de support (17), une structure de protection (19) en forme de couche est placée sur l'agent adhésif, et l'agent adhésif est durci en formant une liaison sans tension entre la structure de protection (19) et la couche de support (17), sans actions mécaniques sur la puce (1, 100).
